# EUROPEAN PATENT APPLICATION

(11) **EP 1 447 944 A2**
(43) Date of publication of application: **18.08.2004**
(21) Application number: 04000868.2
(22) Date of filing: 16.01.2004
(51) Int. Cl.: H04L 12/56

(54) **Bluetooth wireless communication apparatus and method of notifying users of devices connectable to ad-hoc networks to establish effective connections based on a user's selection**

(30) Priority: 17.02.2003 KR 2003009907
(71) Applicant: Samsung Electronics Co., Ltd., Suwon-city, Gyeonggi-do (KR)
(72) Inventor: Chang, Ki-soo, Paldal-gu Suwon-si Gyeonggi-do (KR)
(74) Representative: Grünecker, Kinkeldey, Stockmair & Schwanhäusser Anwaltssozietät

(57) **Abstract**

Disclosed is a Bluetooth wireless communication apparatus (200) and method for indicating devices connectable to ad-hoc networks. The Bluetooth wireless communication apparatus (200) is provided with a user interface (210) and a control unit (230). The user interface enables a user to select a device to which he or she wishes to connect. The control unit provides, through the user interface, information on peripheral devices in a range connectable to the wireless communication device, and, if a device to which the user wants to connect is selected through the user interface, establishes a connection to only a device to which the user wishes to connect, out of the peripheral devices. Accordingly, connection is made only to a device that a user wishes, while connection to the devices to which the user does not want to connect is not made.

## Description

### CROSS-REFERENCE TO RELATED APPLICATIONS

This application claims the benefit of Korean Patent Application No. 2003-09907 filed February 17, 2003, in the Korean Intellectual Property Office, the disclosure of which is incorporated herein by reference.

### BACKGROUND

### 1. Field of the Invention

The present invention relates to a wireless communication apparatus and method, and more particularly to a Bluetooth wireless communication apparatus and method, which is capable of notifying the users about the peripheral devices which are connectable through an ad-hoc network so as to enable the users to select and establish connections to their desired terminals and not to attempt for connections to undesirable terminals.

### 2. Description of the Related Art

Bluetooth, which is a common term in wireless local area data communications, is a code name of a wireless data communication technology covering electronic communications, networking, computing, and consumable materials. The Bluetooth technology replaces various cable connections necessary in a local area. For example, being implemented in a mobile phone and a laptop computer, the Bluetooth wireless technology enables a connection without requiring cables. Devices that can be part of a Bluetooth system include personal digital assistants (PDAs), desktop computers, facsimiles, keyboards, joysticks, but, in fact, all digital devices can be part of the Bluetooth system.

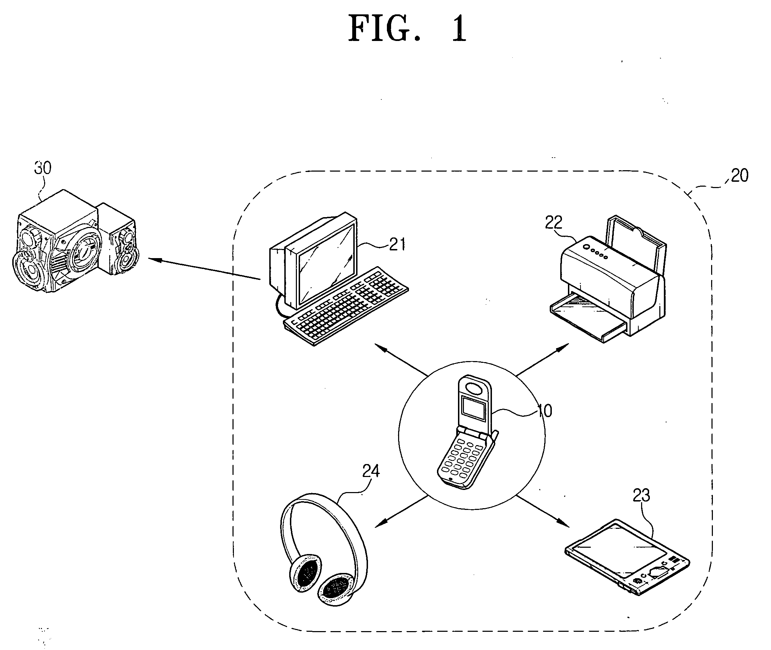

FIG. 1 is a view for illustrating a general Bluetooth network.

Referring to FIG. 1, a mobile phone 10 operating as a master performs an inquiry to form a piconet with a computer 21, a printer 22, a PDA 23, and a headset 24 in a directly connectable range 20. The computer 21 can form another piconet with a speaker 30.

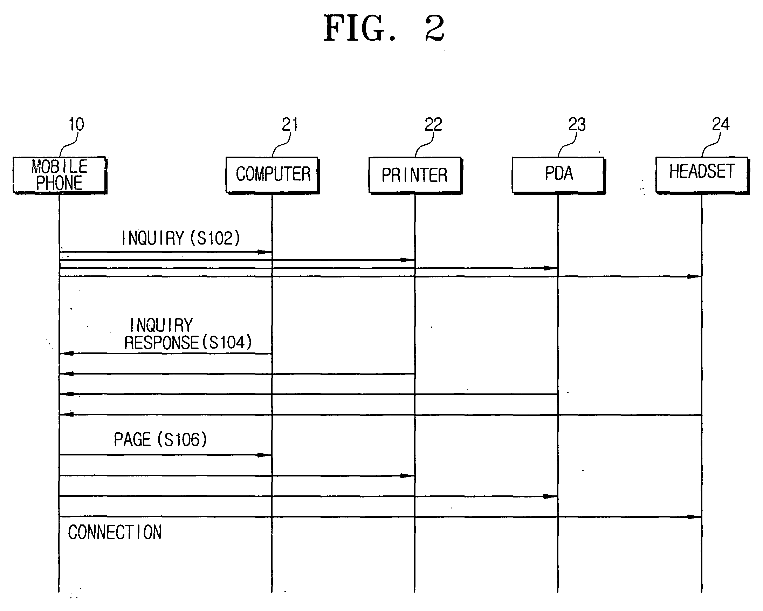

FIG. 2 is a view for schematically showing signal flows for a conventional connection process for a Bluetooth group network.

With a power supply, the Bluetooth nodes become free nodes by default. Next, each node changes its status such as inquiry phase, inquiry scan phase, stand-by phase, and so on.

In the Bluetooth, the master node performs an inquiry to slave devices in a directly connectable range (Step S102). The slave devices that have received the inquiry each send an inquiry response to the master (Step S104). Next, the master carries out a page procedure to establish connections with adjacent nodes (Step S106).

Such a conventional Bluetooth group network establishes connections with all slaves that have sent a response to the inquiry of the master even when it does not want connections with some slave devices.

However, the Bluetooth is a connection-oriented system consuming much time for connection establishments such as inquiry, inquiry scan, page, page scan, or the like, before data transmissions. Accordingly, there exists a problem in that it is the waste of wireless resources to attempt to establish connections with all slaves regardless of users' intents as well as it takes lots of time to establish connections.

### SUMMARY

The present invention has been devised to solve the above problem, and accordingly it is an aspect of the present invention to provide a Bluetooth wireless communication apparatus and method, which is capable of notifying users about the peripheral devices which are connectable through an ad-hoc network, so as to enable the users to select and establish connections with their desired devices while not attempting a connection with undesired devices.

In order to achieve the above aspect and/or other features of the present invention, a Bluetooth wireless communication apparatus includes a user interface which enables the user to select devices he or she wants, and a control unit which provides through the user interface the information on peripheral devices connectable to the wireless communication device. If a device to which the user wants to connect is selected through the user interface, a connection is established only to the selected device.

The control unit sends an inquiry to search for connectable peripheral devices, receives inquiry responses including device information from devices that have received the inquiry, and provides information on the peripheral devices. At this time, the device information is contained in unused portions of a frequency hop synchronization (FHS) packet used for an inquiry response message.

Preferably, the Bluetooth wireless communication apparatus also has a liquid crystal display (LCD) unit for displaying various information. The information on the peripheral devices is displayed on the LCD unit in a form of character string. Further, a speaker can be provided for producing a sound so that the information on the peripheral devices can be indicated with a sound through the speaker.

The control unit sends an inquiry to search for a first group of peripheral devices in a directly connectable wireless range, receives inquiry responses including device information from devices that have received the inquiry, and, if service attributes of the devices are collected from the received device information and the devices have a group ad-hoc network or scattemet ability, searches for peripheral devices connectable to corresponding devices and further displays the connectable devices as information on the peripheral devices. At this time, it is possible that the control unit, if the received service attributes support a group ad-hoc network service or indicate the scatternet ability, requests the corresponding devices to discover more peripheral devices.

According to a preferred embodiment of the present invention, a wireless communication method for notifying of devices connectable through an ad-hoc network is provided. More specifically, in a Bluetooth-embedded wireless communication apparatus having an input unit for enabling the user to input desired. values and a display unit for displaying various information, the wireless communication method includes the steps of providing, through the display unit, information on peripheral devices in a range connectable to the wireless communication apparatus, and establishing, if a device to which the user wants to connect is selected through the input unit, a connection to only the device to which the user wants to connect out of the peripheral devices.

The step of providing information through the display unit includes steps of sending an inquiry to search for the connectable peripheral devices, and receiving inquiry responses including device information from devices that has received the inquiry, and providing information on the peripheral devices. At this time, preferably, the device information is contained in unused portions of a frequency hop synchronization (FHS) packet used for an inquiry response message.

Preferably, the wireless communication apparatus for the wireless communication method further includes a liquid crystal display (LCD) unit for displaying various information, and the information on the peripheral devices being displayed on the LCD unit in the form of a character string. It is possible that the wireless communication apparatus for the wireless communication method further includes a speaker for producing sound so that the information on the peripheral devices can be indicated by sound through the speaker.

Further, it is possible that the step of providing information through the LCD unit includes steps of sending an inquiry train to search for a first group of peripheral devices in a directly connectable wireless range, and receiving inquiry responses including device information from devices that have received the inquiry, and searching, if service attributes of the devices are collected from the received device information and the devices have group ad-hoc network ability or scatternet ability, for peripheral devices connectable to corresponding devices and displaying the connectable devices as information on the peripheral devices. At this time, the wireless communication method can further include a step of, if the received service attributes support a group ad-hoc network service or indicate the scatternet ability, requesting the corresponding devices to discover more peripheral devices.

In a Bluetooth-embedded wireless communication apparatus having an input unit for enabling the user to input desired values and a display unit for displaying various information, a wireless communication method for indicating devices connectable through an ad-hoc network according to the present invention includes the steps of providing, through a display unit, information on peripheral devices in a range connectable to the wireless communication apparatus, and establishing, if a device to which the user wants to connect is selected through the input unit, a connection to the device to which the user wants to connect.

### BRIEF DESCRIPTION OF THE DRAWINGS

The invention will be described in detail with reference to the following drawings in which like reference numerals refer to like elements, and wherein:
FIG. 1 is a view for illustrating a general Bluetooth network;
FIG. 2 is a view for schematically showing signal flows for a conventional connection process for a Bluetooth group network;
FIG. 3 is a block diagram for showing a Bluetooth wireless communication apparatus indicating devices connectable to ad-hoc networks according to an embodiment of the present invention;
FIG. 4 is a flow chart for explaining a process of connecting a Bluetooth-embedded portable device to peripheral devices according to an embodiment of the present invention;
FIG. 5 is a view for showing a frequency hop synchronization (FHS) packet structure;
FIG. 6 is a view for illustrating a list of connectable devices; and
FIG. 7 is a view for showing a process for a mobile phone connecting to a speaker according to an embodiment of the present invention.

### DETAILED DESCRIPTION OF THE PREFERRED EMBODIMENT

Hereinafter, the present invention will be described in detail with reference to the accompanying drawings.

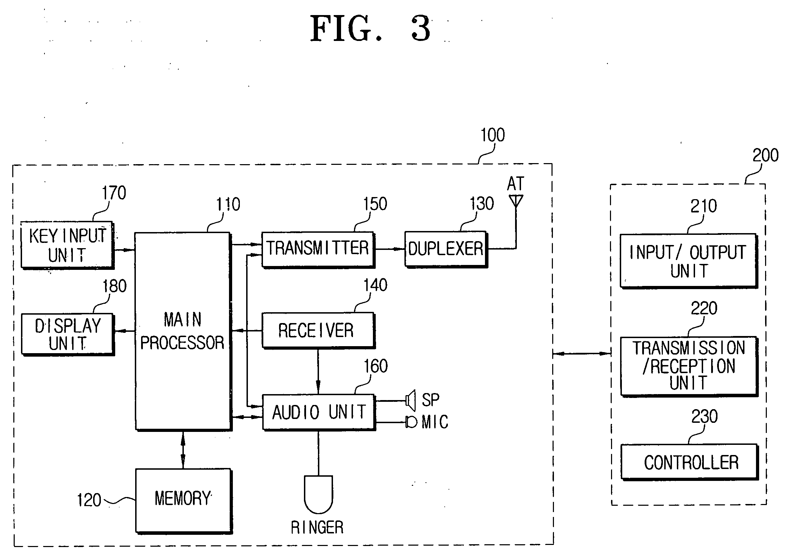

FIG. 3 is a block diagram for showing a Bluetooth wireless communication apparatus for indicating devices connectable to ad-hoc networks according to an embodiment of the present invention.

Referring to FIG. 3, a host 100 of a mobile phone and a Bluetooth module 200 are connected to each other through a bus so as to communicate necessary information and data.

A main processor 110 of the host 100 controls overall operations of the mobile phone. A memory 120 stores a predetermined program for controlling the overall operations of the mobile phone, and stores data inputted and outputted through the mobile phone and text message data in a predetermined area. A duplexer 130 communicates with a base station through an antenna, and separates reception and transmission signals. The receiver 140 is controlled to receive wireless signals inputted through the antenna, and receives the wireless signals separated by the duplexer 130. The transmitter 150 is controlled to filter and amplify a wireless signal outputted from audio unit 160 which will be later described, and transmits the amplified wireless signal via the duplexer 130 and the antenna AT. The audio unit 160 is controlled by the main processor 110 to modulate an audio signal inputted through a microphone MIC into a wireless signal as well as to demodulate and output a wireless signal received through the receiver 140 to a speaker SP as an audio signal.

A key input unit 170 is provided with multiple numerical keys and function keys, and, when a user presses a key, the key input unit 170 generates and outputs to the main processor 110 key data corresponding to the key.

A display unit 180 includes a liquid crystal display (LCD) displaying various information, which is controlled by the main processor 110 to receive and display key data generated from the key input unit 170 and various information.

Referring to FIG. 3, the Bluetooth module 200 is provided with an input/output unit 210 for inputting and outputting data and information from and to the host 100, a transmission/reception unit 220 for externally transmitting and receiving data, and a controller 230.

The transmission/reception unit 220 processes an externally received signal, for example, a Radio Frequency (RF) signal, and externally transmits data packets.

In general, the Bluetooth module 200 has an additional transmission/reception unit for externally transmitting and receiving data, but a system can be structured to have the Bluetooth module 200 use the transmitter 150 and receiver 140 of the host 100.

The controller 230 provides through a user interface information on connectable peripheral devices in a range connectable to the wireless communication device, and, if a device a user desires to connect to has been selected by a user through the user interface, establishes connections with the user's desired device and releases the connections with the other devices.

The controller 230 sends an inquiry to search for peripheral devices in a direct wireless range, receives inquiry responses including device information from devices that have received the inquiry, and collects service attributes of the devices from the received device information. The device information is transmitted by utilizing unused portions of a frequency hop synchronization (FHS) packet used for an inquiry response message in the Bluetooth system.

The controller 230 verifies whether the devices have other connectable devices, from the received device information, and, if the devices have other connectable devices, receives service attributes of the other devices by service browsing.

When the received service attributes support a group ad-hoc network service or indicates scatternet ability, it is possible to establish an Logical Link Control and Adaptation Protocol (L2CAP) connection for a Bluetooth Network Encapsulation Protocol (BNEP) connection to a corresponding device. Further, the controller 230 can request the corresponding device to discover more peripheral devices.

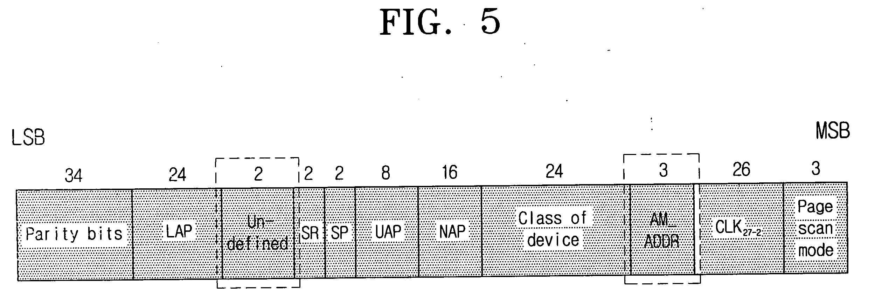

The device information, as shown in FIG. 5, is contained, for transmission, in the Undefined field (2 bits) and the AM_ADDR field (3 bits) which are unused portions of an FHS packet used for an inquiry response message.

The FHS packet of FIG. 5 is sent to a paging device by an inquiry scan device during an inquiry procedure, transmitted from the master to a slave during a page procedure, and, when the master and slave exchanges their roles, sent by a device exchanged to the master. When the master transmits an FSH packet during a page or a master/slave switch procedure, a receiver uses the AM_ADDR, and, when the FHS packet is sent back by the inquiry scan device, the receiver uses the AM_ADDR of "0". Accordingly, if the Undefined bits and the AM_ADDR bits are used together, 5 bits can be used for a device type so that 32 device types can be contained.

The controller 230 controls the display unit 180 to display in the form of a character string peripheral devices connectable to a wireless communication device. Further, the controller 230 controls the audio unit 160 to output an audio signal indicating the peripheral devices through the speaker SP. A user can select devices he or she wants to connect to through the key input unit 170.

In the present embodiment, the key input unit 170, display unit 180, and speaker SP become user interfaces enabling users to select wireless communication devices they want.

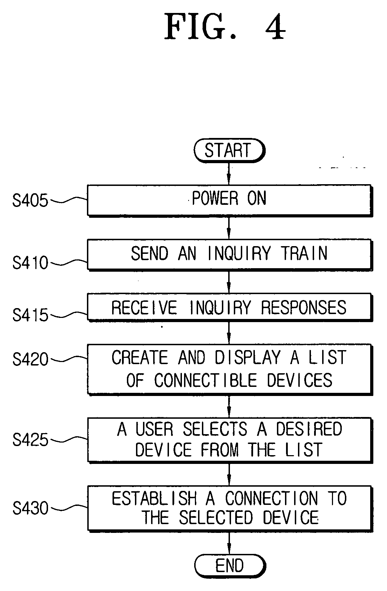

FIG. 4 is a flow chart for explaining a process of connecting a Bluetooth-embedded portable device to peripheral devices according to an embodiment of the present invention.

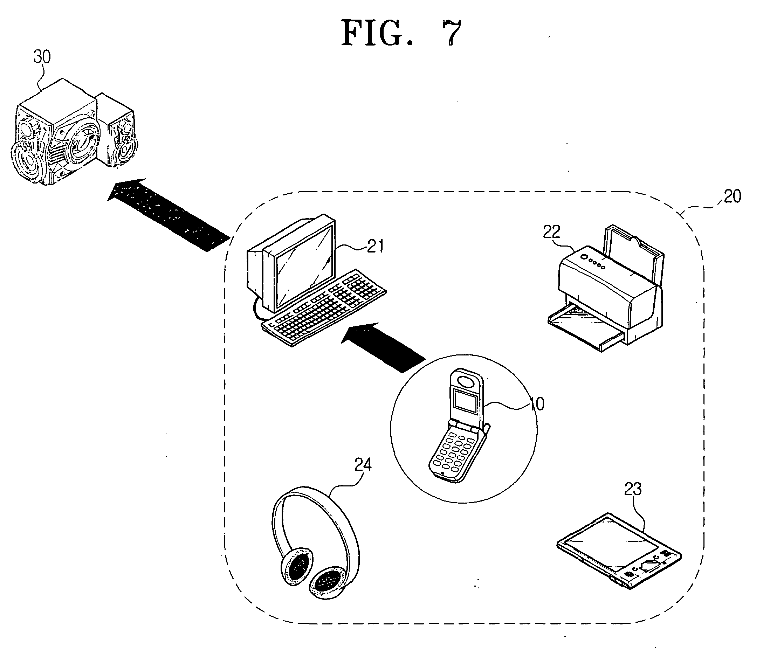

Referring to the flow chart, a mobile phone 10, as shown in Fig. 7, for example, is powered on (S405), and then sends an inquiry to search for other Bluetooth devices in a wirelessly connectable range (S410).

The devices that have received the inquiry transmit inquiry responses by using an FHS packet, and the mobile phone 10 receives the responses (S415). The FHS packet used for the inquiry responses is transmitted with device information contained. The device information for transmission, as described above, is contained in the Undefined field of 2 bits and the AM_ADDR field of 3 bits which are unused bits of the payload of FHS packet.

The mobile phone 10 creates a list of received device information, and displays the list in the form of a character string on the display unit 180, for example, an LCD screen (S420). At this time, the device information listed and displayed on the display unit 180 of the mobile phone appears immediately after inquiry responses the respective devices have sent, are received. That is, each time the responses arrive from the respective device, information is added on the list for update. If a response from a device to which a user wants to connect has arrived, the responses from the other devices become meaningless, and the mobile phone 10 proceeds with a procedure establishing a connection to the corresponding device by a selection of the user. Such a connection establishment procedure is carried out at the same time a response arrives from a device to which a user wishes to connect:

If a user selects a connection to a device he or she wishes from the displayed list (S425), the mobile phone 10 establishes a connection to the selected device only, and does not attempt for connections to the other devices (S430).

Through such steps, a connection to only a device a user wants is established, and connections to devices the user does not want are not attempted for, to thereby enable limited wireless resources to be efficiently used as well as a user to rapidly establish a connection to a device he or she wants.

In the meantime, the mobile phone 10 can create and display a list of devices other than the devices in a directly connectable wireless range. That is, in the above embodiment, first, the mobile phone 10 defines as a first group a computer 21, a printer 22, a PAD 23, and a headset 24 in a directly connectable wireless range. Further, the mobile phone 10 allows SDP service browsing to look into other devices connectable to the computer 21, printer 22, PDA 23, and headset 24 from the received device information, and to receive service attributes of the other devices.

If the received service attributes support a group ad-hoc network service or indicate a scatternet ability, the mobile phone 10 establishes an L2CAP connection to the corresponding device for a BNEP connection. If the computer 21 and the printer 22 indicate the group network (GN) service and the scatternet ability, the mobile phone 10 establishes an L2CAP connection for a BNEP connection. Further, the mobile phone 10 negotiates with the MTU, and filters other network packet types. Thereafter, the mobile phone 10 transmits a request message to them in order to discover more peripheral devices. For the request message, the computer 21 can discover and report the speaker 30 of high quality to the mobile phone 10. If the printer 22 does not discover any other new devices, the mobile phone defines as a second group device the speaker 30 connectable through the computer 21.

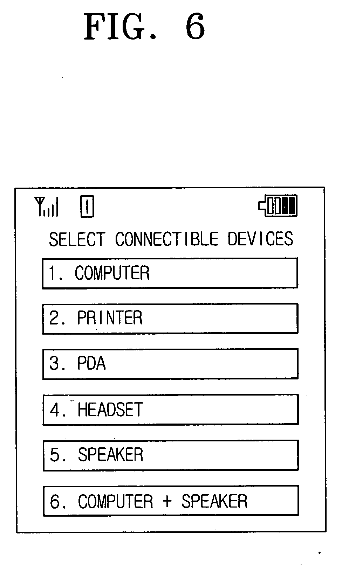

The mobile phone 10 creates a list of 'computer', 'printer', 'PDA', 'headset', 'speaker', and 'computer + speaker', and, as shown in FIG. 6, displays the list in the form of a character string on the display unit 180, that is, an LCD screen, thereof. Further, the mobile phone 10 can notify a user of the list by sound through the speaker SP.

If a user selects a connection to one desired device out of the list, the mobile phone 10 establishes a connection to the selected device only, and ignores responses from other devices. If a user has an MP3 file and wishes to enjoy music in high quality, the user can select the speaker 30 among the devices displayed in the list. Next, as shown in FIG. 7, the mobile phone does not attempt to connect to other devices, but connects to only the speaker 30. Accordingly, the user can listen to the MP3 file, using the maximum bandwidth for the speaker 30.

The present invention provides users with information on peripheral devices through a user interface of a terminal on a monitor or by using sound, establishes a connection to only a device that a user wants, and does not attempt to connect to devices the user dose not want, to thereby reduce time it takes to connect to and disconnect from undesired devices, and the present invention maintains a connection to only a desired device, to thereby effectively use limited wireless resources. Further, the present invention can, rapidly connect to a desired device and reduce the number of connected devices.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A Bluetooth wireless communication apparatus for identifying devices connectable to ad-hoc networks, comprising:
a user interface enabling a user to select at least one desired device among peripheral devices ; and
a control unit for providing, through the user interface, information on the peripheral devices connectable to a wireless communication device, and, if said at least one desired device is selected through the user interface, establishing a connection to only said at least one desired device, out of the peripheral devices.

2. The Bluetooth wireless communication apparatus of claim 1, wherein the control unit sends an inquiry to search for said connectable peripheral devices, receives inquiry responses including device information from said at least one of said peripheral devices that has received the inquiry, and provides information on said at least one of the peripheral devices that received the inquiry.

3. The Bluetooth wireless communication apparatus of claim 2, wherein the device information is contained in unused portions of a frequency hop synchronization (FHS) packet used for an inquiry response message.

4. The Bluetooth wireless communication apparatus of claim 1, further comprising a liquid crystal display (LCD) unit for displaying various information, and the various information on the peripheral devices being displayed on the LCD unit in a form of a character string.

5. The Bluetooth wireless communication apparatus of claim 1, further comprising a speaker for producing sound, and the information on the peripheral devices being indicated by sound through the speaker.

6. The Bluetooth wireless communication apparatus of claim 1, wherein the control unit sends an inquiry to search for a first group of peripheral devices in a directly connectable wireless range, receives inquiry responses including device information from at least one of the peripheral devices that has received the inquiry, and, if service attributes of said at least one of the peripheral devices is collected from the received device information and said at least one of the peripheral devices has one of a group ad-hoc network ability and scatternet ability, searches for said at least one of the peripheral devices connectable to corresponding devices and further displays the connectable corresponding devices as information on said at least one of the peripheral devices.

7. The Bluetooth wireless communication apparatus of claim 6, wherein , if the received service attributes one of support a group ad-hoc network service and indicate the scatternet ability, the control requests the corresponding devices to discover more peripheral devices.

8. A wireless communication method of indicating devices connectable to ad-hoc networks for a Bluetooth-embedded wireless communication apparatus which has an input unit for enabling a user to input desired values and a display unit for displaying various information, the wireless communication method comprising steps of:
providing through the display unit information on peripheral devices in a range connectable to the wireless communication apparatus; and
if a device to which the user wants to connect is selected through the input unit, establishing a connection to only the device to which the user wants to connect out of the peripheral devices.

9. The wireless communication method of claim 8, wherein the step of providing information through the display unit comprises steps of:
sending an inquiry to search for the connectable peripheral devices; and
receiving at least one inquiry response comprising device information from at least one of the peripheral devices that has received the inquiry, and providing information on said at least one of the peripheral devices that has received the inquiry.

10. The wireless communication method of claim 9, wherein the device information is contained in unused portions of a frequency hop synchronization (FHS) packet used for an inquiry response message.

11. The wireless communication method of claim 8, wherein the Bluetooth wireless communication apparatus further comprises a liquid crystal display (LCD) unit for displaying various information, and the various information on the peripheral devices being displayed on the LCD unit in a form of a character string.

12. The wireless communication method of claim 8, wherein the Bluetooth wireless communication apparatus further comprises a speaker for producing sound, and the information on the peripheral devices being indicated by sound through the speaker.

13. The wireless communication method of claim 8, wherein the step of providing information through the display unit comprises steps of:
sending an inquiry to search for peripheral devices in a connectable wireless range, and receiving inquiry responses including device information from at least one of the peripheral devices that has received the inquiry; and
determining, if service attributes of at least one of the peripheral devices are collected from the received device information and said at least one of the peripheral devices has one of group ad-hoc network ability and scatternet ability, which of said at least one of the peripheral devices are connectable to corresponding devices and displaying the connectable corresponding devices as information on said at least one of the peripheral devices determined to be connectable to corresponding devices.

14. The wireless communication method of claim 13, further comprising a step of, if the received service attributes support a group ad-hoc network service and indicate the scattemet ability, requesting the corresponding devices to discover more peripheral devices.

15. A wireless communication method of identifying devices connectable to an ad-hoc network for a Bluetooth-embedded wireless communication apparatus which has an input unit for enabling a user to input desired values and a display unit for displaying various information, the wireless communication method comprising steps of:
providing, through a display unit, information on peripheral devices in a range connectable to the wireless communication apparatus; and
if a device to which the user wants to connect is selected through the input unit, a connection to the device to which the user wants to connect.
